(19) Europäisches Patentamt / European Patent Office / Office européen des brevets

(11) **EP 2 241 149 B1**

(12) **EUROPEAN PATENT SPECIFICATION**

(45) Date of publication and mention
of the grant of the patent:
**19.08.2020 Bulletin 2020/34**

(21) Application number: **09700352.9**

(22) Date of filing: **07.01.2009**

(51) Int Cl.:
**H04B 7/26** *(2006.01)*   **H04W 74/00** *(2009.01)*
**H04W 74/08** *(2009.01)*

(86) International application number:
**PCT/KR2009/000051**

(87) International publication number:
**WO 2009/088206 (16.07.2009 Gazette 2009/29)**

(54) **DEVICE AND METHOD FOR TRANSMITTING RANDOM ACCESS PREAMBLE**

VORRICHTUNG UND VERFAHREN ZUR ÜBERTRAGUNG EINER DIREKTZUGRIFFSPRÄAMBEL

DISPOSITIF ET PROCÉDÉ DE TRANSMISSION DE PRÉAMBULE D'ACCÈS ALÉATOIRE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **07.01.2008 CN 200810002414**

(43) Date of publication of application:
**20.10.2010 Bulletin 2010/42**

(60) Divisional application:
**20184959.3**

(73) Proprietor: **Samsung Electronics Co., Ltd.**
**Suwon-si, Gyeonggi-do, 443-742 (KR)**

(72) Inventors:
• **LI, Yingyang**
 **Beijing 100125 (CN)**
• **ZHANG, Yujian**
 **Beijing 100125 (CN)**
• **LI, Xiaoqiang**
 **Beijing 100125 (CN)**

(74) Representative: **Grünecker Patent- und**
**Rechtsanwälte**
**PartG mbB**
**Leopoldstraße 4**
**80802 München (DE)**

(56) References cited:
**EP-A1- 2 239 989**   **WO-A1-2007/045504**
**US-A1- 2007 064 665**   **US-A1- 2007 171 889**
**US-A1- 2007 206 531**   **US-A1- 2007 263 579**
**US-A1- 2007 291 696**

• **PANASONIC: "RACH remaining issues", 3GPP DRAFT; R1-074922, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Korea; 20071030, 30 October 2007 (2007-10-30), XP050108377, [retrieved on 2007-10-30]**
• **MOTOROLA: "RACH Frequency Hopping Pattern", 3GPP DRAFT; R1-074606, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Korea; 20071030, 30 October 2007 (2007-10-30), XP050108091, [retrieved on 2007-10-30]**
• **CMCC ET AL: "Way Forward on LTE TDD Frame Structure", 3GPP DRAFT; R1-075020, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Korea; 20071106, 6 November 2007 (2007-11-06), XP050108467, [retrieved on 2007-11-06]**

**Description**

**BACKGROUND OF THE INVENTION**

**FIELD OF INVENTION**

The present invention relates to a wireless communication system, especially to a device and method for transmitting random access preamble in a wireless communication system.

**DESCRIPTION OF PRIOR ART**

Now, the 3rd Generation Mobile Communication System Partnership Project (3GPP) standardization organization has commenced on Long-term Evolution (LTE) to the existing system criteria. Among many physical layer transmission techniques, both a downlink transmission technique based on Orthogonal Frequency Division Multiplexing (OFDM) and an uplink transmission technique based on Single Carrier Frequency Division Multiple Access (SCFDMA) are in hot spot to be researched.

In the following description, the sampling frequency is 30.72MHz by way of an example. In this case, when the interval between sub-carriers is 15KHz, the number of valid OFDM samples is 2048 and the sample interval is $T_s$ = 1/(15000×2048) correspondingly. For other sampling frequencies, the corresponding number of valid OFDM samples and the number of CP samples can be obtained with proportion to the sampling frequency.

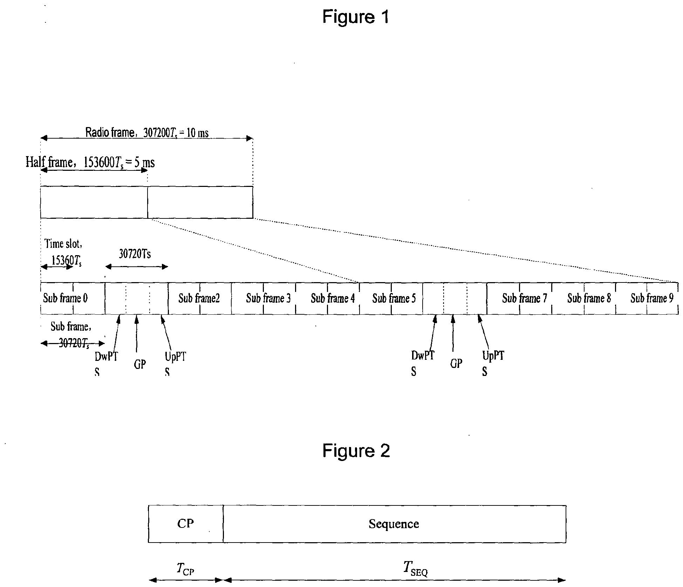

There are two types of frame structure in LTE system: Frame Structure Type 1 and Frame Structure Type 2. In frame structure type 1, the Frequency Division Duplex (FDD) mode is employed, and in frame structure type 2, the Time Division Duplex (TDD) mode is employed. Here, the LTE TDD system design is focused on. According to present discussion, figure 1 illustrates the frame structure of an LTE

TDD system. A radio frame with a length of 307200×$T_s$=10 ms for each one is equally divided into two half-frames with a length of 153600×$T_s$ = 5 ms. Each half-frame contains eight slots with a length of 15360$T_s$ = 0.5 ms and three special domains, i.e., the downlink pilot time slot (DwPTS), the guard period (GP) and the uplink pilot time slot (UpPTS). The total length of said three special domains is 30720$T_s$ = 1ms. Each slot contains several OFDM symbols. There are two kinds of CP in OFDM symbols, viz., the general CP and the extended CP. A slot with the general CP contains 7 OFDM symbols and a slot with the extended CP contains 6 OFDM symbols. In the application of general CP, the CP in the first OFDM symbol of the slot is 160×$T_s$ (about 5.21μs) long, and the CPs in the rest 6 OFDM symbols are 144×$T_s$ (4.69μs) long; and in the application of extended CP, the CP in each OFDM symbols of the slot is 512×$T_s$ (16.67μs) long. Two continuous slots compose a subframe. Subframe 1 and subframe 6 contain said three special domains. According to present discussion, subframe 0, subframe 5 and the DwPTS are fixed for downlink transmission; for the transition period of 5ms, the UpPTS, subframe 2 and subframe 7 are fixed for uplink transmission; and for the transition period of 10ms, the UpPTS and subframe 2 are fixed for uplink transmission.

According to present discussion on LTE TDD, the uplink data, the random access preamble and the channel sensing reference signal (SRS) can be transmitted in the UpPTS. Figure 2 illustrates the structure of the random access preamble, which contains a circular prefix with a length of $T_{CP}$ and a sequence with a length of $T_{SEQ}$. At present, several structures of the preamble are defined in the table below:

Table 1: Parameters for the random access preamble

| The preamble format | $T_{CP}$ | $T_{SEQ}$ |
|---|---|---|
| 0 | 3152×$T_s$ | 24576×$T_s$ |
| 1 | 21012×$T_s$ | 24576×$T_s$ |
| 2 | 6224×$T_s$ | 2×24576×$T_s$ |
| 3 | 21012×$T_s$ | 2×24576×$T_s$ |
| 4 (only for the frame structure type 2) | 0×$T_s$ | 4096×$T_s$ |

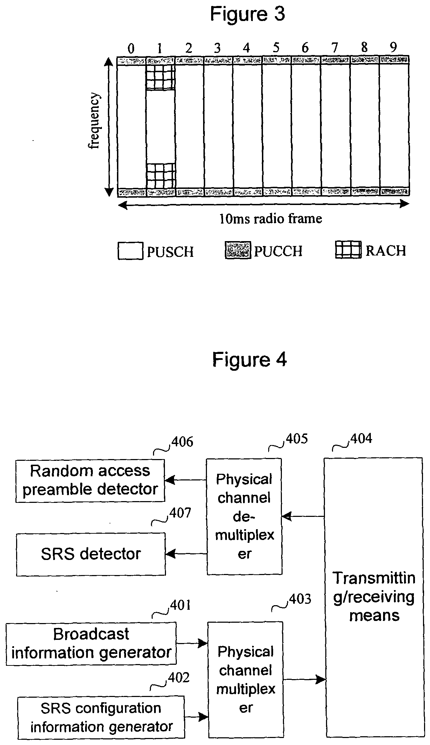

In table 1, the preamble format 4 is only applied to an LTE TDD system , the sequence length $T_{SEQ}$ of which is 4096×$T_s$, which is equal to the time length of two uplink SCFDMA symbols; the CP length $T_{CP}$ of which is 0, i.e., no CP is added in said preamble. The feature of such format is that said random access preamble is short and generally transmitted in virtue of the UpPTS in an LTE TDD system. According to present discussion, the RACH signal in this format is transmitted in the position 5120×$T_s$ prior to the stop of UpPTS. Therefore, in the receiving end of a BS, the random access preamble is transmitted within the time segment with a length of $5120 \times T_s$ prior to the stop of UpPTS. And in the following, the random access preamble transmitted through UpPTS is referred to as short RACH for short. According to present discussion on LTE, the allocation of frequency band for uplink control channel (PUCCH) is implemented at the two ends of the band so as to avoid that the uplink shared data channel (PUSCH) is divided into multiple frequency bands by the PUCCH. The reason is that user equipments transmitting uplink data through multiple frequency bands with no frequency overlap will damage the single-carrier attribute, from which the increasing of cube metric (CM) is resulted. Figure 3 schematically shows the frequency locations of the RACH in an LTE FDD system. In each RACH's timing location, the two possible frequencies locate in the two ends of the system frequency band and are adjacent to PUCCH. This configuration is performed to avoid damaging PUSCH's single-carrier attribute. According to present discussion, in an LTE FDD system, only one access random channel resource can be configured for one RACH's timing location. And RACH's collision probability is controlled by configuring the RACH density in time domain. In order to obtain the frequency diversity effect, RACH implements frequency hopping between the two possible frequency locations illustrated in figure 3. For an LTE TDD system, it is possibly necessary to configure several random access channel resources for one RACH timing location to counteract the limitation of uplink downlink transition period.

It is a typical configuration that the UpPTS contains two SCFDMA symbols. In this case, the UpPTS can be adopted to transmit either the random access preamble in format 4 in table 1 or the SRS. Suppose one or more RACH resources have been configured in the UpPTS. To guarantee that RACH resources are orthogonal to SRS resources, the SRS can only be transmitted through the rest frequency resources. In present patent, a kind of RACH configuration method is proposed. With this method, not only the requirement of the format 4 for the random access preamble can be met, but also the transmission of SRS can be implemented effectively.

EP 2 239 989 A1 is a postpublished document describing a method for sending a sounding reference signal of an uplink channel in a time division duplex system.

"RACH remaining issues", 3GPP TSG RAN WG1, R1-074922 discusses PRACH for 1.4 MHz system bandwidth and frequency position and frequency hopping pattern for PRACH.

"RACH Frequency Hopping Pattern", 3GPP TSG RAN1#51, R1-074606 discusses frequency location and frequency hopping pattern of the PRACH.

"Way Forward on LTE TDD Frame Structure", TSG-RAN WG1 #51, R1-075020 presents a proposal for an optimized frame structure.

WO 2007/045504 A1 discloses a technique for performing a random access procedure over a radio interface.

## SUMMARY OF THE INVENTION

The present invention aims at proposing a kind of device and method for transmitting random access preamble in a wireless communication system.

The invention is what is claimed in the independent claims. Preferred embodiments are specified in the dependent claims.

According to one aspect of the present invention, a method for configuring RACH comprises the steps of:

a) BS indicates the currently configured RACH resource in virtue of the broadcast channel;

b) UE (user equipment) receives the configuration information on RACH resources from BS, selects the occupied RACH resources by itself among several continuous RACH resources in one end of the system frequency band,, generates the random access preamble and then multiplexes the generated preamble on the selected RACH resource for transmission;

c) the BS extracts the random access preamble on several continuous RACH resources in one end of the system frequency band and detects the extracted random access preamble.

According to another aspect of the present invention, a method for configuring RACH comprises the steps of:

a) BS indicates the currently configured RACH resource in virtue of the broadcast channel;

b) UE (user equipment) receives the configuration information on RACH resources from BS, selects the occupied RACH resources by itself among several continuous RACH resources distributed in two ends of the system frequency band, generates the random access preamble and multiplexes the generated preamble on the selected RACH resource for transmission;

c) the BS extracts the random access preamble on several continuous RACH resources distributed in two ends of the system frequency band and detects the extracted random access preamble.

According to another aspect of the present invention, a method for configuring RACH comprises the steps of:

a) BS indicates the RACH resources configured in UpPTS in virtue of the broadcast channel;

b) UE receives the configuration information on RACH resources from BS, selects the occupied RACH resources by itself among several time division multiplexed continuous RACH resources, generates the random access preamble and then multiplexes the generated preamble on the selected RACH resource for transmission;

c) the BS extracts the random access preamble on several time division multiplexed continuous RACH resources and detects the extracted random access preamble.

According to another aspect of the present invention, a method for configuring RACH comprises the steps of:

a) UE transmits the random access preamble within the UpPTS, the length of the CP in which is greater than zero;

b) BS detects the random access preamble within the UpPTS, the start position of the DFT window of which is not earlier than that of the first valid SCFDMA symbol in the UpPTS.

## BRIEF DESCRIPTION OF THE DRAWINGS

Figure 1 shows the LTE TDD frame structure;

Figure 2 shows the structure of the random access preamble;

Figure 3 shows the random access channel's location in frequency domain;

Figure 4 shows the device in BS for RACH and SRS processing;

Figure 5 shows the device in UE for RACH and SRS processing;

Figure 6 shows the device in BS for detecting several time division multiplexed RACHs;

Figure 7 shows the device in UR for transmitting several time division multiplexed RACHs;

Figure 8 illustrates the method for configuring RACH and SRS;

Figure 9 illustrates the method for configuring RACH;

Figure 10 illustrates the method for configuring RACH in time division multiplex mode;

Figure 11 shows the structure of short RACH with CP.

## DETAILED DESCRIPTION OF PREFERRED EMBODIMENTS

The present invention provides a design method for the random access channel in an LTE TDD system, especially the design method for the random access preamble transmitted through UpPTS. Hereinafter, the random access preamble transmitted through UpPTS is referred to as the short RACH.

For an LTE TDD system, it is necessary to configure several RACH resources in one RACH timing location. Here, a RACH resource refers to the time frequency resource with frequency bandwidth of R and time length T. In an LTE system, R = 1.08MHz; T refers to the time interval occupied by the preamble. It is possible for a short RACH which is transmitted through UpPTS that a single short RACH resource could carry a fewer preambles. For instance, it is defined in the LTE TDD that it is necessary to provide 64 preambles by the physical layer to layer 2. If the number of preambles provided by each short RACH resource is less than 64, it is necessary for the physical layer to configure a plurality of short RACH resources to obtain the ability to support 64 preambles. In addition, if the load of the random access channel in the system is comparatively heavy, it is necessary to configure a plurality of RACH resources in one RACH timing location even though each RACH resource can provide 64 preambles.

The present invention describes three methods for configuring the random access channel in the following.

Method for configuring RACH and SRS

Similar to the discussion on LTE FDD system, in order to avoid damaging PUSCH's single-carrier attribute, only the frequencies on the two ends of the system frequency band can be allocated as RACH resources for an LTE TDD system. Particularly, there are two situations in the allocation. In one situation PUCCH is configured in the two ends of the system frequency band. In this case, the two backup locations for RACH resources are the frequency resource adjacent to PUCCH. In the other situation, no PUCCH is configured in the two ends of the system frequency band. In this case, the two backup locations for RACH resources are the boundaries of the system frequency band.

Now, the methods for allocating RACH resources in the RACH timing locations are described as follows.

In the first method, a plurality of RACH resources are distributed on the RACH backup resources at the two ends of the system frequency band as uniformly as possible for one RACH timing location. Suppose that the number of RACH resources necessary to be allocated at some RACH timing location is N, then $\left\lfloor \dfrac{N}{2} \right\rfloor$ and $\left\lceil \dfrac{N}{2} \right\rceil$ RACH resources are respectively allocated at the two ends of the system frequency band. Particularly, if N = 1, only one RACH resource is allocated at the RACH timing location and it locates at one end of the system frequency band; and If N > 1, at the RACH timing location, the RACH resources are distributed at the two ends of the system frequency band as uniformly as possible. This method is applicable to all five formats of the random access preamble listed in table 1. And with this method, RACH resources are uniformly distributed at the two ends of the frequency band so as to be advantage to frequency hop resource allocation for PUSCH. An important frequency hop method is the mirror image one, uniformly distributing the RACH resources at the two ends of the frequency band to reduce the constraints on PUSCH frequency hop. If it is necessary to transmit the random access preamble, UE selects one occupied RACH resource among the plurality of RACH resources distributed at the two ends of the system frequency band according to the currently configured RACH resource patterns in BS, generates the random access preamble and then multiplexes the generated preamble on the selected RACH resources for transmission. And according to the currently configured RACH resource patterns, the BS extracts the random access preamble from the plurality of RACH resources distributed at the two ends of the system frequency band and then detects the extracted random access preamble.

In the second method, $N_1$ RACH resources are continuously distributed at one end of the system frequency band for one RACH timing location; and $N_2$ RACH resources are continuously distributed in the other end of the system frequency band for the next RACH timing location. Suppose the number of the RACH resources to be allocated at the two continuous RACH timing locations is $N_1$ and $N_2$, respectively, and both of the $N_1$ and $N_2$ are greater than or equal to 1. In this way, the frequency domain distance between the RACH resources distributed in said two continuous RACH timing locations can be guaranteed to be maximal so that the probability of successful retransmission of the random access preamble from UE can be improved. If it is necessary to transmit the random access preamble, UE selects one unoccupied RACH resource among the plurality of continuous RACH resources at one end of the system frequency band according to the currently configured RACH resource pattern in BS and then occupies it, generates the random access preamble and then multiplexes the generated preamble on the selected RACH resource for transmission. And according to the currently configured RACH resource pattern, the BS extracts the random access preamble among the plurality of continuous RACH resources located at one end of the system frequency band and then detects the extracted random access preamble.

In the second method, it is applicable to all five formats of the random access preamble listed in table 1. For instance, to allocate RACH resources within the UpPTS with said method, no constraint is performed on the information transmitted through the frequencies rather than those occupied by RACH resources, i.e., said information can be uplink data, SRS, or uplink control information, and so on. Here, suppose all frequencies in UpPTS except for the one occupied by RACHs are adopted to transmit SRS. With said second method, the rest resources in UpPTS form continuous sub frequency channel, and the two continuous rest ones that contain RACHs locate at two ends of the system frequency band, respectively. In this case, if the frequency band occupied by the RACH resources is narrower than or equal to one half of the system frequency band, the rest resources in two UpPTSs can cover the entire system bandwidth so that this method supports to detect all channels with different frequencies on the system bandwidth. On these rest resources, the narrowband SRS can be transmitted; and if the bandwidth of broadband SRS is less than or equal to one half of the system bandwidth, the rest sub frequency-bands within two UpPTS can support to detect broadband channel for the entire system bandwidth. Moreover, if the bandwidth of the frequency band occupied by the RACH resources is greater than one half of the system frequency band, this second method supports to detect channel with the frequencies as more as possible in the system bandwidth. BS transmits the configuration information on SRS to UE, and UE transmits SRS via some frequency in the rest sub frequency band according to said configuration information transmitted by the BS.

For the first method mentioned above, if the number of the RACH resources to be allocated for the RACH timing location is more than two, it is necessary to continuously allocate several RACH resources at one end of the system frequency band. For the second method mentioned above, if the number of the RACH resources to be allocated for the RACH timing location is more than 1, it is necessary to continuously allocate several RACH resources at one end of the system frequency band. In general, in the method for continuously allocating RACH resources, the adjacent RACH resources occupy the adjacent resource blocks (RB). Suppose each RACH resource occupies R RBs. For instance, when some RACH resource occupies the $k \sim k + R - 1$ RBs, the adjacent RACH resource occupies the $k - R \sim k - 1$ RBs or the $k + R \sim k + 2R - 1$ RBs. If it is necessary to reduce interference between the RACH resources, said process of continuously allocating several RACH resources at one end of the system frequency band can be extended to allocate a plurality of RACH resources so that there are m RBs between the adjacent RACH resources (m >= 0). That m = 0 corresponds to the case of a method for normal continuous allocation. Suppose some RACH resource occupies the $k \sim k + R - 1$ RBs, then the adjacent RACH resource occupies the $k - R - m \sim k - 1 - m$ RBs or the $k + R + m \sim k + 2R - 1 + m$ RBs.

BS can indicate the currently configured RACH resource via the broadcast channel. And the system can predefine the configuration patterns for some RACH resource. By indexing said configuration patterns, only the index value is necessary to be transmitted via the broadcast channel.

Figure 4 shows the device for processing RACH and SRS in BS. Firstly, the broadcast information (401) for configuring RACH and the SRS configuration information (402) are generated by BS. Said two pieces of information are multiplexed by the physical channel multiplexer (403) to be transmitted through the transmitting/receiving means (404); then BS receives signal from UE through the transmitting/receiving means (404). The received signal is de-multiplexed through the physical channel de-multiplexer (405) according to the method proposed in present invention. And according to currently configured pattern on RACH resource in the BS, BS extracts the random access preamble from the plurality of continuous RACH resources located at one end of the system frequency band and detects the extracted random access preamble through module 406. When BS configures the frequencies other than those for RACH resources to transmit SRS, it extracts the SRS signal from the frequencies other than those for RACH resources and detects the extracted SRS through module 407.

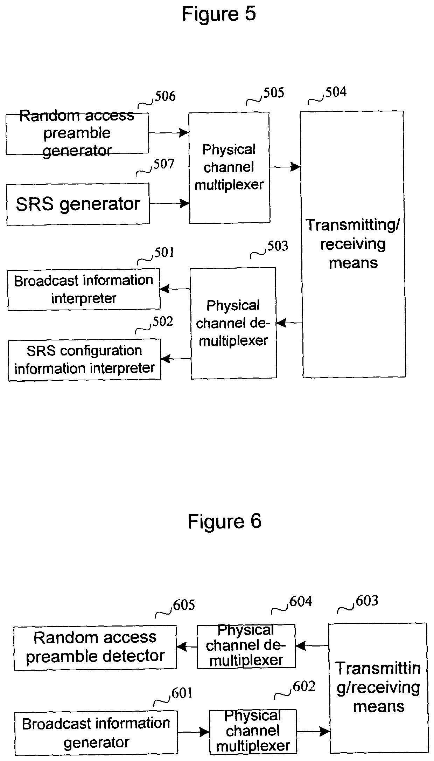

Figure 5 shows the device for processing RACH and SRS in UE. Firstly, UE receives signal from BS through the transmitting/receiving means (504). The received signal is de-multiplexed through the physical channel de-multiplexer (503) and the broadcast information (501) on RACH configuration and SRS configuration information (502) are obtained. Then, if it is necessary to transmit the random access preamble, UE selects its occupied RACH resources from the plurality of continuous ones at one end of the system frequency band according to currently configured RACH resource configuration pattern. Now, the random access preamble is generated in the module 506. After multiplexed by the physical channel multiplexer (505) into the selected RACH resources, the preamble is transmitted through the transmitting/receiving means (504). In the case that BS configures the frequencies other than those for RACH resources to transmit SRS, UE generates SRS in module 507, multiplexes it into the BS's configured frequencies through the physical channel multiplexer (505), and then transmits it through the transmitting/receiving means (504).

## Method for configuring multiple RACH resources in UpPTS

In some configuration cases in an LTE TDD system, the UpPTS contains more than two SCFDMA symbols. For instance, to be backward compatible with TD-SCDMA, the UpPTS can contain 2, 6, 7, or 11 symbols. In the preamble format 4 in table 1, the time length is $1120 \times T_s$, which is equal to the length of 2.5 SCFDMA symbols. Suppose some short RACHs have been transmitted via the UpPTS, then within the sub frequency-band for RACH, the short RACHs only occupy part of the SCFDMA symbols. For example, when the UpPTS contains 6 symbols, three or four SCFDMA symbols within the sub frequency-band for RACH will be idle. In present invention, it provides a method in the following on how to utilize these remaining time frequency resources.

If it is necessary to configure a plurality of RACH resources in a UpPTS and the UpPTS contains comparatively many symbols, the present invention provides a solution of multiplexing a plurality of RACH resources in the UpPTS in time division multiplex mode. Here, no constraint is declared on whether BS is allowed to schedule resources occupied by RACHs to UE for uplink data transmission or not. If it is necessary here to guarantee that RACH resources are orthogonal to other resources (such as SRS, uplink data and so on), only the SCFDMA symbols other than those for RACH in the sub frequency-band can be adopted to transmit other information (such as SRS, uplink data and so on). For instance, it is supposed the time length of a short RACH is T. The time length of the preamble in format 4 in table 1 for an LTE TDD system is $5120 \times T_s$, which is not an integer times of the length of the number of uplink symbol. The first method for allocating RACH resources in the UpPTS is to continuously allocate a plurality of RACH resources in the sub frequency-band for RACH, i.e., the start sample of a latter RACH resource is the one next to the stop sample of the former RACH resource. For instance, the RACH resources are allocated continuously forward starting from the stop position of the UpPTS; or the RACH resources are allocated continuously backward starting from the start position of the UpPTS; or one RACH resource is allocated starting from stop position of the second SCFDMA symbol in UpPTS, and other RACH resource are allocated continuously backward starting from the sampling position next to the stop sample of the second SCFDMA symbol in UpPTS. The second method for allocating RACH resources in UpPTS is to make the RACH resources be accordant with the boundaries of corresponding SCFDMA symbols. For instance, each RACH signal begins to be transmitted at the moment that is T prior to the terminating position of its last SCFDMA symbol; or each RACH signal begins to be transmitted at the moment when its first SCFDMA symbol starts.

The method proposed in present invention can be jointly used with method for multiplexing a plurality of RACH resources based on FDM. In this case, the RACH resources are allocated in several sub frequency-bands of the UpPTS and at each sub frequency-band one or more RACH resources is or are allocated.

BS can indicate the currently configured RACH resource via the broadcast channel. And the system can predefine some configuration patterns for RACH resource. By indexing said configuration patterns, only the index value is necessary to be transmitted via the broadcast channel.

Figure 6 shows the device with which BS detects the time division multiplexed (TDM) RACH resources. Firstly, the broadcast information (601) for configuring RACH is generated by BS, multiplexed by the physical channel multiplexer (602), and transmitted through the transmitting/receiving means (603); then BS receives the signal through the transmitting/receiving means (603) from UE. The received signal is de-multiplexed through the physical channel de-multiplexer (604) according to the method proposed in present invention. And according to the currently configured RACH resource patterns, BS extracts the random access preamble from the plurality of RACH resources multiplexed in time division mode and detects the extracted random access preamble through module 605.

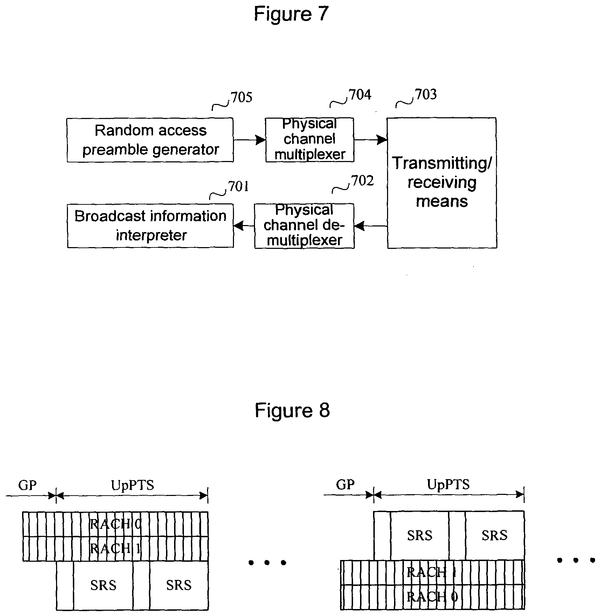

Figure 7 shows the device with which UE transmits TDM RACH resources. Firstly, UE receives signal from BS through the transmitting/receiving means (703). The received signal is de-multiplexed through the physical channel de-multiplexer (702) and the broadcast information (701) for configuring RACH is obtained; then, if it is necessary to transmit the random access preamble, UE selects its occupied RACH resources among the plurality of TDM RACH resources according to currently configured RACH resource pattern and generates the random access preamble in the module 705. After multiplexed by the physical channel multiplexer (704) into the selected RACH resources, the preamble is transmitted through the transmitting/receiving means (703).

## Structure of RACH added with CP

In format 4 of the random access preamble listed in table 1, the length of CP is zero. To support the processing in the frequency domain, the method based on overlap & add is adopted by BS for receiving the random access preamble. Configuring a general CP frame structure is taken as an example to describe a typical configuration of UpPTS when UpPTS contains two SCFDMA symbols. Suppose the symbol division and CP length setting within the 1ms period formed by the three special domains in the TDD system are just the same as that in other subframes in a TDD system, the UpPTS is $4384 \times T_s$ long in time domain. In format 4, the preamble begins to transmit at the moment that is $5120 \times T_s$ prior to the termination of UpPTS. In this way, RACH signal in the preamble format 4 occupies part of the GP period. Therefore, interference may be easily received from the adjacent BS's downlink signal when the RACH signal is transmitted in preamble format 4. In detail, since the RACH's initial timing is prior to the position of the first symbol in UpPTS, the RACH signal may have been suffered from interference before any other signals transmitted through the frequencies other than those for RACHs in UpPTS are suffered from interference caused by the adjacent BS.

The present invention provides a method for configuring the short RACH to solve the interference problem mentioned above. The particular solution is to add CP into a RACH signal, and the structures which are similar to the preamble formats 0-3 in table 1 are utilized. To guarantee that RACH signal's anti-interference performance is not less than that of other signals transmitted through the frequencies other than those for RACH signals in UpPTS, the present invention provides that the starting position of the DFT window with which BS detects the random access preamble is not earlier than the start position of the first valid SCFDMA symbols starts in UpPTS. Here, the start position of the valid SCFDMA symbol refers to the timing of the first SCFDMA sample without considering the CP. Suppose the length of the CP in the first symbol of UpPTS is $C \times T_s$, then the starting position of the DFT window with which BS detects the random access preamble should be delayed at least $C \times T_s$ later than UpPTS's initial timing. Taking the LTE TDD system as an example and supposing the symbol division and CP length setting within the 1ms period formed by the three special domains are just the same as that in other subframes, then according to present LTE TDD subframe structure, C = 160 when UpPTS contains 7 symbols; otherwise, C = 144.

The time lengths of CP and RACH signal's valid sequence can be determined according to such factors as the supported cell coverage and so on. When it is necessary to maintain the design parameters for the preamble format 4, as shown in table 2, one configuration method is to set the time length of the RACH signal's valid sequence as $T_p = 4096 \times T_s$ so as to be accordant with the sequence length of the RACH signal in the preamble format 4. Suppose the RACH structure of the present invention begins to be transmitted at the moment that is $T$ prior to UpPTS's termination position. For instance, we can configure $T = \times 5120\,T_s$ in the same mode for configuring the RACH signal in the preamble format 4. And the starting position of the DFT window for the BS detecting the random access preamble starts from the first valid SCFDMA symbol in UpPTS. In this case, the length of CP in RACH signal in present invention is $T_{CP} = T - T_p - t_{cp}$, where $t_{cp}$ denotes the length of the CP in the last symbol of UpPTS. For a general CP frame structure, $t_{cp} = 144 \times T_s$, and the length of CP is $880 \times T_s$.

Table 2: Format of preamble with added CP

| Preamble format | $T_{CP}$ | $T_{SEQ}$ |
|---|---|---|
| x (only applied to frame structure type 2) | $880 \times T_s$ | $4096 \times T_s$ |

With this method, it is possible that the RACH preamble still occupies part of the GP period. However, the signal during such period is not utilized by BS when detecting the random access preamble detecting, the performance on resisting interference caused by adjacent BSs has been improved. With this method, when the start position of the DFT window with which BS detects the random access preamble is the start position of the first valid SCFDMA symbol in UpPTS, the RACH signal experiences no interference until any other signals transmitted through UpPTS suffer from interference. When the start position of the DFT window with which BS detects the random access preamble is latter than the start position of the first valid SCFDMA symbol in UpPTS, , the RACH signals begin to be interference only after any other signals transmitted through UpPTS have suffered certain interference.

Embodiments and Examples

In this section, four embodiments and examples of present invention are provided. To avoid too tedious description of present patent, detail on well-known function or means is omitted in the following.

The first embodiment

In the embodiment, how to configure a plurality of RACH resources and SRS in the UpPTS is illustrated for present invention. Let's take the system with the bandwidth of 5MHz as an example and suppose UpPTS contains two SCFDMA symbols and no transmission of PUCCH exists in this case. Here suppose that two RACH resources are transmitted in FDM mode in an UpPTS, and the rest resources in UpPTS are adopted to transmit SRS. Since the 5MHz system contains 25 resource blocks (RB) and the bandwidth of each RACH resource occupies 6 RBs, only 13 rest RBs exist in the UpPTS except the resource occupied by RACH.

As shown in figure 8, in the first UpPTS, two RACH resources are continuously allocated from the upper end of the system frequency band, which occupies 12 RBs; and the rest 13 RBs in the system bandwidth are adopted to transmit SRS. In the second UpPTS, two RACH resources are continuously allocated from the lower end of the system frequency band which occupies 12 RBs; and the rest 13 RBs in the system bandwidth are adopted to transmit SRS. As shown in figure 8, the RACH resources in the two UpPTS locate respectively at the two ends of the system frequency band and can obtain superior frequency diversity effect. Meanwhile, the SRS in the two UpPTS covers the entire system frequency band so that the measurement of channel state over the entire system band is well supported. Particularly, this structure can support the transmission of such narrowband SRSs as occupying a bandwidth of 4 RBs or 6 RBs; also, it can support the transmission of such narrowband SRSs as occupying a width of 12 RBs or 13 RBs, i.e., about half of the system bandwidth.

The second example

In this example, the method for configuring a plurality of RACH resources in the preamble format 0 is described for an LTE TDD system. Suppose the RACH channels are allocated in subframe 2 (or subframe 5). Meanwhile, this subframe is adopted to transmit PUCCH. We further suppose that it is necessary for one subframe to transmit two RACH resources. To extend the time length of RACH resource to a plurality of subframes, this embodiment is also suitable for configuring the RACH resources in the preamble formats 1~3.

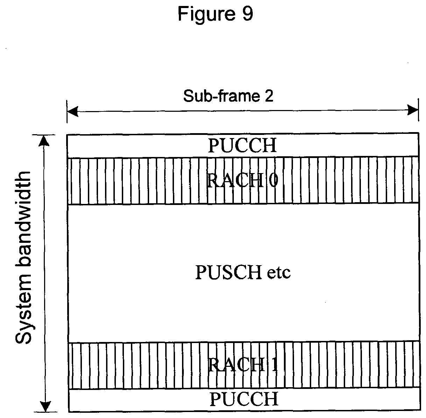

As shown in figure 9, one or more RBs at the two ends of the system frequency band are adopted to transmit PUCCH. The two RACH resources locate in the two ends of the system band respectively and occupy the RBs adjacent to those for PUCCH. Suppose PUCCH occupies k RBs, the system bandwidth contains N RBs. The RBs are indexed from 0, then $k \sim k + 5$ RBs are adopted to transmit one RACH resource; and the $N - k - 6 \sim N - k - 1$ RBs are adopted to transmit the other RACH resource. In this way, the mirror image relationship exists between the two RACH resources with respect to the center of the system bandwidth. So, no affection will be caused to the allocation of resources for frequency hop PUSCH with the mirror image method.

The third example

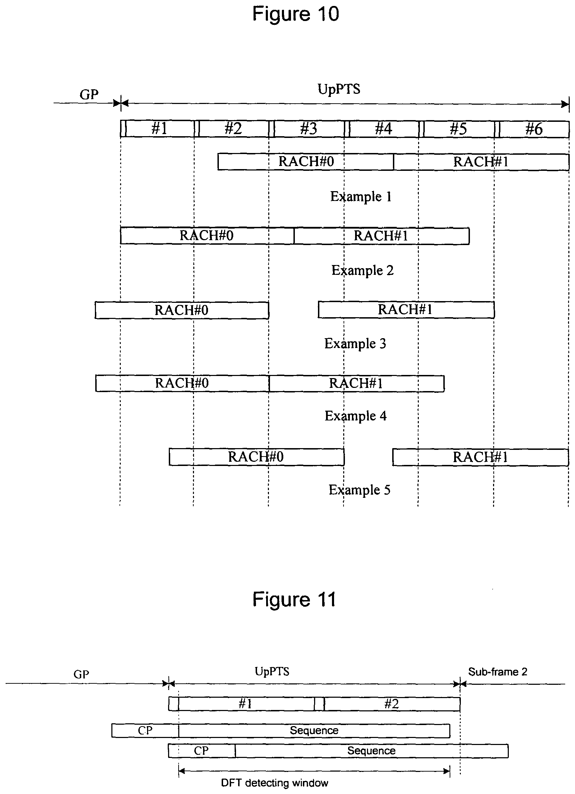

In this example, the method for configuring a plurality of RACH resources in UpPTS in a TDM mode is utilized as a example. Suppose the UpPTS contains 6 SCFDMA symbols and the two RACH resources can be accordingly multiplexed together in TDM mode. T denotes the length of time occupied by each RACH resource. For instance, the length of time occupied by the RACH resource in the preamble format 4 in table 1 is $T=5120 \times T_s$. Figure 10 illustrates the TDM RACH resources. In order to highlight the method for TDM RACH resources, no illustration is done to the usage of frequencies other than those for RACHs in UpPTS.

In the first example, the two RACH resources are continuously allocated starting from the termination position of UpPTS, viz., the system begins to transmit RACH#1 at the moment that is $T$ prior to the termination position of UpPTS; and the system begins to transmit RACH#0 at the moment that is $2T$ prior to the termination position of UpPTS. Here, the first SCFDMA symbol in the UpPTS is not occupied by RACH and therefore can be adopted to transmit SRS or uplink data and so on.

In the second example, the two RACH resources are continuously allocated starting from the start position of UpPTS, viz., the system begins to transmit RACH#0 at the moment of the start position of UpPTS; and the system begins to transmit RACH#1 at the moment that is delayed $T$ behind the start position of UpPTS. Here, the last SCFDMA symbol in the UpPTS is not occupied by RACH and therefore can be adopted to transmit SRS or uplink data and so on.

In the third example, the two RACH resources are allocated starting from the stop position of SCFDMA symbol, viz., the system begins to transmit RACH#0 at the moment that is $T$ prior to the stop position of the second SCFDMA symbol in UpPTS; and the system begins to transmit RACH#1 at the moment that is $T$ prior to the stop position of the fifth SCFDMA symbol in UpPTS. Here, the last SCFDMA symbol in the UpPTS is not occupied by RACH and therefore can be adopted to transmit SRS or uplink data and so on.

In the fourth example, the two RACH resources are continuously allocated, viz., the system begins to transmit RACH#0 at the moment that is $T$ prior to the stop position of the second SCFDMA symbol in UpPTS; and the system begins to transmit RACH#1 at the moment of the sample position next to the second SCFDMA symbol in UpPTS. Here, the last SCFDMA symbol in the UpPTS is not occupied by RACH and therefore can be adopted to transmit SRS or uplink data and so on.

In the fifth example, the two RACH resources are allocated both starting from the stop positions of the SCFDMA symbols, viz., the system begins to transmit RACH#0 at the moment that is $T$ prior to the stop position of the third SCFDMA symbol in UpPTS; and the system begins to transmit RACH#1 at the moment that is $T$ prior to the stop position of the sixth SCFDMA symbol in UpPTS.

The fourth example

In this example, the short RACH with an added CP is described as a example. Suppose the UpPTS contains two SCFDMA symbols and the new short RACH structure is the same as the preamble format 4, i.e., the system begins to transmit RACH at the moment that is $5120 \times T_s$ prior to the termination position of UpPTS. Figure 11 illustrates the configuration on the preamble with CP. With the preamble parameters in table 2, the time length of RACH signal's sequence is $4096 \times T_s$, and the length of CP is $880 \times T_s$. The start position of the DFT with which BS detects random access preamble is the start position of the first valid SCFDMA symbol in UpPTS. With this method, it is possible that the RACH preamble still occupies part of the GP period. However, since the signals within this period is not utilized by BS in the random access preamble detecting, performance on resisting interference caused by adjacent BSs is improved. RACH signal experiences no interference before any other signals transmitted through UpPTS suffer from interference. With this configuration method, it is possible that RACH signal causes interference to the first SCFDMA symbol of subframe 2 (or subframe 6). But this interference level is very low.

**Claims**

1. A method for receiving a random access preamble by a base station in a wireless communication system employing TDD, time division duplex, mode, the method comprising:

    generating random access channel, RACH, resource allocation information to allocate a RACH resource in an uplink pilot time slot, UpPTS;
    transmitting the RACH resource allocation information to a terminal; and

receiving a random access preamble in the UpPTS from the terminal,

wherein first resource blocks of the RACH resource corresponding to a first timing are configured at one position of a frequency band and second resource blocks of the RACH resource corresponding to a second timing are configured at another position of the frequency band, and

wherein the first resource blocks and the second resource blocks are determined based on a RACH resource index.

2. The method of claim 1, wherein the RACH resource is allocated based on a first distance from one end of the frequency band in the first timing, and the RACH resource is allocated based on a second distance from another end of the frequency band in the second timing.

3. The method of claim 1, wherein the RACH resource occupies a bandwidth corresponding to 6 consecutive resource blocks.

4. The method of claim 1, wherein a format for the random access preamble transmitted in the UpPTS is preamble format 4.

5. A method for transmitting a random access preamble by a terminal in a wireless communication system employing TDD, time division duplex, mode, the method comprising:

receiving random access channel, RACH, resource allocation information allocating a RACH resource in an uplink pilot time slot, UpPTS from a base station; and

transmitting a random access preamble in the UpPTS, to the base station,

wherein first resource blocks of the RACH resource corresponding to a first timing are configured at one position of a frequency band and second resource blocks of the RACH resource corresponding to a second timing are configured at another position of the frequency band, and

wherein the first resource blocks and the second resource blocks are determined based on a RACH resource index.

6. The method of claim 5, wherein the RACH resource is allocated based on a first distance from one end of the frequency band in the first timing, and the RACH resource is allocated based on a second distance from another end of the frequency band in the second timing.

7. The method of claim 5, wherein the RACH resource occupies a bandwidth corresponding to 6 consecutive resource blocks.

8. The method of claim 5, wherein a format for the random access preamble transmitted in the UpPTS is preamble format 4.

9. A base station for receiving a random access preamble in a wireless communication system employing TDD, time division duplex, mode, the base station comprising:

a transceiver (404, 603) for transmitting and receiving a signal; and

a controller for controlling to generate random access channel, RACH, resource allocation information to allocate a RACH resource in an uplink pilot time slot, UpPTS, transmit the RACH resource allocation information to a terminal, and to receive a random access preamble in the UpPTS from the terminal,

wherein first resource blocks of the RACH resource corresponding to a first timing are configured at one position of a frequency band and second resource blocks of the RACH resource corresponding to a second timing are configured at another position of the frequency band and

wherein the first resource blocks and the second resource blocks are determined based on a RACH resource index.

10. The base station of claim 9, wherein the RACH resource is allocated based on a first distance from one end of the frequency band in the first timing, and the RACH resource is allocated based on a second distance from another end of the frequency band in the second timing.

11. The base station of claim 9, the RACH resource occupies a bandwidth corresponding to 6 consecutive resource blocks.

**12.** The base station of claim 10, wherein a format for the random access preamble transmitted in the UpPTS is preamble format 4.

**13.** A terminal for transmitting a random access preamble in a wireless communication system employing TDD, time division duplex, mode, the terminal comprising:

a transceiver (504, 703) for transmitting and receiving a signal; and
a controller for controlling to receive random access channel, RACH, resource allocation information allocating a RACH resource in an uplink pilot time slot, UpPTS from a base station, and to transmit a random access preamble in the UpPTS, to the base station,
wherein first resource blocks of the RACH resource corresponding to a first timing are configured at one position of a frequency band and second resource blocks of the RACH resource corresponding to a second timing are configured at another position of the frequency band, and
wherein the first resource blocks and the second resource blocks are determined based on a RACH resource index.

**14.** The terminal of claim 13, wherein the RACH resource is allocated based on a first distance from one end of the frequency band in the first timing, and the RACH resource is allocated based on a second distance from another end of the frequency band in the second timing.

**15.** The terminal of claim 13, wherein the RACH resource occupies a bandwidth corresponding to 6 consecutive resource blocks.

**16.** The terminal of claim 13, wherein a format for the random access preamble transmitted in the UpPTS is preamble format 4.

**Patentansprüche**

**1.** Verfahren zum Empfangen einer Präambel mit wahlfreiem Zugriff durch eine Basisstation in einem drahtlosen Kommunikationssystem, das den TDD- (Time-Division-Duplex-(Zeitmultiplex-)) Modus verwendet, wobei das Verfahren umfasst:

Erzeugen von Ressourcenzuweisungsinformationen für einen Kanal mit wahlfreiem Zugriff, RACH, um eine RACH-Ressource in einem Uplink-Pilotzeitschlitz, UpPTS, zuzuweisen;
Senden der RACH-Ressourcenzuweisungsinformationen an ein Endgerät; und
Empfangen einer Präambel mit wahlfreiem Zugriff in dem UpPTS von dem Endgerät,
wobei erste Ressourcenblöcke der RACH-Ressource, die einer ersten Zeitgabe entspricht, an einer Position eines Frequenzbandes konfiguriert sind und zweite Ressourcenblöcke der RACH-Ressource, die einer zweiten Zeitgabe entspricht, an einer weiteren Position des Frequenzbandes konfiguriert sind, und
die ersten Ressourcenblöcke sowie die zweiten Ressourcenblöcke auf der Grundlage eines RACH-Ressourcenindexes bestimmt werden.

**2.** Verfahren nach Anspruch 1, bei dem die RACH-Ressource in der ersten Zeitgabe basierend auf einem ersten Abstand von einem Ende des Frequenzbandes zugewiesen wird, und die RACH-Ressource in der zweiten Zeitgabe basierend auf einem zweiten Abstand von einem anderen Ende des Frequenzbandes zugewiesen wird.

**3.** Verfahren nach Anspruch 1, bei dem die RACH-Ressource eine Bandbreite belegt, die 6 aufeinanderfolgenden Ressourcenblöcken entspricht.

**4.** Verfahren nach Anspruch 1, bei dem ein Format für die Präambel mit wahlfreiem Zugriff, die in dem UpPTS gesendet wird, das Präambelformat 4 ist.

**5.** Verfahren zum Senden einer Präambel mit wahlfreiem Zugriff durch ein Endgerät in einem drahtlosen Kommunikationssystem, das den TDD- (Time-Division-Duplex- (Zeitmultiplex-)) Modus verwendet, wobei das Verfahren umfasst:

Empfangen von Ressourcenzuweisungsinformationen für einen Kanal mit wahlfreiem Zugriff, RACH, die eine RACH-Ressource in einem Uplink-Pilotzeitschlitz, UpPTS, zuweisen, von einer Basisstation; und
Senden einer Präambel mit wahlfreiem Zugriff in dem UpPTS an die Basisstation,
wobei erste Ressourcenblöcke der RACH-Ressource, die einer ersten Zeitgabe entspricht, an einer Position eines Frequenzbandes konfiguriert sind und zweite Ressourcenblöcke der RACH-Ressource, die einer zweiten Zeitgabe entspricht, an einer anderen Position des Frequenzbandes konfiguriert sind, und
die ersten Ressourcenblöcke sowie die zweiten Ressourcenblöcke auf der Grundlage eines RACH-Ressourcenindexes bestimmt werden.

6. Verfahren nach Anspruch 5, bei dem die RACH-Ressource basierend auf einem ersten Abstand von einem Ende des Frequenzbandes in der ersten Zeitgabe zugewiesen wird, und die RACH-Ressource basierend auf einem zweiten Abstand von einem anderen Ende des Frequenzbandes in der zweiten Zeitgabe zugewiesen wird.

7. Verfahren nach Anspruch 5, bei dem die RACH-Ressource eine Bandbreite belegt, die 6 aufeinanderfolgenden Ressourcenblöcken entspricht.

8. Verfahren nach Anspruch 5, bei dem ein Format für die in dem UpPTS gesendete Präambel mit wahlfreiem Zugriff das Präambelformat 4 ist.

9. Basisstation zum Empfangen einer Präambel mit wahlfreiem Zugriff durch eine Basisstation in einem drahtlosen Kommunikationssystem, das den TDD- (Time-Division-Duplex- (Zeitmultiplex-)) Modus verwendet, wobei die Basisstation umfasst:

einen Sendeempfänger (404, 603) zum Senden und Empfang eines Signals; und
eine Steuereinheit zum Steuern des Erzeugens von Ressourcenzuweisungsinformationen für einen Kanal mit wahlfreiem Zugriff, RACH, um eine RACH-Ressource in einem Uplink-Pilotzeitschlitz, UpPTS, zuzuweisen, die RACH-Ressourcenzuweisungsinformationen an ein Endgerät zu senden und eine Präambel mit wahlfreiem Zugriff in dem UpPTS von dem Endgerät zu empfangen,
wobei erste Ressourcenblöcke der RACH-Ressource, die einer ersten Zeitgabe entspricht, an einer Position eines Frequenzbandes konfiguriert sind und zweite Ressourcenblöcke der RACH-Ressource, die einer zweiten Zeitgabe entspricht, an einer weiteren Position des Frequenzbandes konfiguriert sind, und
die ersten Ressourcenblöcke sowie die zweiten Ressourcenblöcke auf der Grundlage eines RACH-Ressourcenindexes bestimmt werden.

10. Basisstation nach Anspruch 9, bei der die RACH-Ressource basierend auf einem ersten Abstand von einem Ende des Frequenzbandes in der ersten Zeitgabe zugewiesen wird, und die RACH-Ressource basierend auf einem zweiten Abstand von einem anderen Ende des Frequenzbandes in der zweiten Zeitgabe zugewiesen wird.

11. Basisstation nach Anspruch 9, bei der die RACH-Ressource eine Bandbreite belegt, die 6 aufeinanderfolgenden Ressourcenblöcken entspricht.

12. Basisstation nach Anspruch 10, bei der ein Format für die in dem UpPTS gesendete Präambel mit wahlfreiem Zugriff das Präambelformat 4 ist.

13. Endgerät zum Senden einer Präambel mit wahlfreiem Zugriff durch eine Basisstation in einem drahtlosen Kommunikationssystem, das den TDD- (Time-Division-Duplex- (Zeitmultiplex-)) Modus verwendet, wobei das Endgerät umfasst:

einen Sendeempfänger (504, 703) zum Senden und Empfang eines Signals; und
eine Steuereinheit zum Steuern des Empfangens von Ressourcenzuweisungsinformationen für einen Kanal mit wahlfreiem Zugriff, RACH, um eine RACH-Ressource in einem Uplink-Pilotzeitschlitz, UpPTS, zuzuweisen, von einer Basisstation und eine Präambel mit wahlfreiem Zugriff in dem UpPTS zu der Basisstation zu senden,
wobei erste Ressourcenblöcke der RACH-Ressource, die einer ersten Zeitgabe entsprechen, an einer Position eines Frequenzbandes konfiguriert sind und zweite Ressourcenblöcke der RACH-Ressource, die einer zweiten Zeitgabe entsprechen, an einer weiteren Position des Frequenzbandes konfiguriert sind, und
die ersten Ressourcenblöcke sowie die zweiten Ressourcenblöcke auf der Grundlage eines RACH-Ressourcenindexes bestimmt werden.

14. Endgerät nach Anspruch 13, bei dem die RACH-Ressource basierend auf einem ersten Abstand von einem Ende des Frequenzbandes in der ersten Zeitgabe zugewiesen wird und die RACH-Ressource basierend auf einem zweiten Abstand von einem anderen Ende des Frequenzbandes in der zweiten Zeitgabe zugewiesen wird.

**15.** Endgerät nach Anspruch 13, bei dem die RACH-Ressource eine Bandbreite belegt, die 6 aufeinanderfolgenden Ressourcenblöcken entspricht.

**16.** Endgerät nach Anspruch 13, bei dem ein Format für die Präambel mit wahlfreiem Zugriff, die in dem UpPTS gesendet wird, das Präambelformat 4 ist.

## Revendications

**1.** Procédé pour recevoir un préambule d'accès aléatoire par une station de base dans un système de communication sans fil employant un mode TDD, duplex à répartition dans le temps, le procédé comprenant:

la génération d'un canal d'accès aléatoire, RACH, d'informations sur l'allocation des ressources pour allouer une ressource RACK dans un créneau horaire pilote de liaison montante, UpPTS ;
la transmission des informations d'allocation de la ressource RACH à un terminal; et
la réception d'un préambule d'accès aléatoire dans l'UpPTS du terminal, dans lequel des premiers blocs de ressource de la ressource RACH correspondant à une première synchronisation sont configurés à une position d'une bande de fréquences et des seconds blocs de ressource de la ressource RACH correspondant à une seconde synchronisation sont configurés à une autre position de la bande de fréquences, et
dans lequel les premiers blocs de ressources et les seconds sont déterminés sur la base d'un indice de ressources RACH.

**2.** Procédé selon la revendication 1, dans lequel la ressource RACH est allouée sur la base d'une première distance à partir d'une extrémité de la bande de fréquences dans le premier temps, et la ressource RACH est allouée sur la base d'une seconde distance à partir d'une autre extrémité de la bande de fréquences dans le second temps.

**3.** Procédé selon la revendication 1, dans lequel la ressource RACH occupe une largeur de bande correspondant à 6 blocs de ressources consécutifs.

**4.** Procédé selon la revendication 1, dans lequel un format pour le préambule d'accès aléatoire transmis dans l'UpPTS est le format de préambule 4.

**5.** Procédé de transmission d'un préambule d'accès aléatoire par un terminal dans un système de communication sans fil employant un mode TDD, duplex à répartition dans le temps, le procédé comprenant:

la réception d'un canal d'accès aléatoire, RACH, d'informations sur l'allocation des ressources l'allocation d'une ressource RACH dans un créneau horaire pilote de liaison montante, UpPTS à partir d'une station de base; et
la transmission d'un préambule d'accès aléatoire dans l'UpPTS, à la station de base,
dans lequel des premiers blocs de ressources de la ressource RACH correspondant à un premier temps sont configurés à une position d'une bande de fréquences et des seconds blocs de ressources de la ressource RACH correspondant à un second temps sont configurés à une autre position de la bande de fréquences, et
dans lequel les premiers blocs de ressources et les seconds sont déterminés sur la base d'un indice de ressources RACH.

**6.** Procédé selon la revendication 5, dans lequel la ressource RACH est allouée sur la base d'une première distance à partir d'une extrémité de la bande de fréquences dans le premier temps, et la ressource RACH est allouée sur la base d'une seconde distance à partir d'une autre extrémité de la bande de fréquences dans le second temps.

**7.** Procédé selon la revendication 5, dans lequel la ressource RACH occupe une largeur de bande correspondant à 6 blocs de ressources consécutifs.

**8.** Procédé selon la revendication 5, dans lequel un format pour le préambule d'accès aléatoire transmis dans l'UpPTS est le format de préambule 4.

**9.** Station de base pour recevoir un préambule d'accès aléatoire dans un système de communication sans fil employant le mode TDD, duplex à répartition dans le temps, la station de base comprenant:

un émetteur-récepteur (404, 603) pour transmettre et recevoir un signal;
un contrôleur pour contrôler la génération d'un canal à accès aléatoire, RACH, d'informations d'allocation de ressources pour allouer une ressource RACH dans un créneau horaire pilote de liaison montante, UpPTS, transmettre les informations d'allocation de ressources RACH à un terminal, et recevoir un préambule à accès aléatoire dans l'UpPTS du terminal,
dans lequel des premiers blocs de ressources de la ressource RACH correspondant à un premier temps sont configurés à une position d'une bande de fréquences et des seconds blocs de ressources de la ressource RACH correspondant à un second temps sont configurés à une autre position de la bande de fréquences et dans lequel les premiers blocs de ressources et les seconds sont déterminés sur la base d'un indice de ressources RACH.

10. Station de base selon la revendication 9, dans laquelle la ressource RACH est allouée sur la base d'une première distance à partir d'une extrémité de la bande de fréquences dans le premier temps, et la ressource RACH est allouée sur la base d'une seconde distance à partir d'une autre extrémité de la bande de fréquences dans le second temps.

11. Station de base selon la revendication 9, dans laquelle la ressource RACH occupe une largeur de bande correspondant à 6 blocs de ressources consécutifs.

12. Station de base selon la revendication 10, dans laquelle un format pour le préambule d'accès aléatoire transmis dans l'UpPTS est le format de préambule 4.

13. Terminal pour transmettre un préambule d'accès aléatoire dans un système de communication sans fil employant le mode TDD, duplex à répartition dans le temps, le terminal comprenant :

un émetteur-récepteur (504, 703) pour transmettre et recevoir un signal
un contrôleur pour commander la réception d'informations d'allocation de ressources de canal à accès aléatoire, RACH, allouant une ressource RACH dans une tranche de temps pilote de liaison montante, UpPTS, à partir d'une station de base, et pour transmettre un préambule d'accès aléatoire dans l'UpPTS, à la station de base, dans lequel des premiers blocs de ressources de la ressource RACH correspondant à un premier minutage sont configurés à une position d'une bande de fréquences et des seconds blocs de ressources de la ressource RACH correspondant à un second minutage sont configurés à une autre position de la bande de fréquences, et dans lequel les premiers blocs de ressources et les seconds sont déterminés sur la base d'un indice de ressources RACH.

14. Terminal selon la revendication 13, dans lequel la ressource RACH est allouée sur la base d'une première distance à partir d'une extrémité de la bande de fréquences dans le premier temps et la ressource RACH est allouée sur la base d'une seconde distance à partir d'une autre extrémité de la bande de fréquences dans le second temps.

15. Terminal selon la revendication 13, dans lequel la ressource RACH occupe une largeur de bande correspondant à 6 blocs de ressources consécutifs.

16. Terminal selon la revendication 13, dans lequel un format pour le préambule d'accès aléatoire transmis dans l'UpPTS est le format de préambule 4.

## Figure 1

## Figure 2

## Figure 3

10ms radio frame

☐ PUSCH    ▨ PUCCH    ⊞ RACH

## Figure 4

## Figure 5

| | | |
|---|---|---|
| Random access preamble generator *506* → | Physical channel multiplexer *505* → | |
| SRS generator *507* → | | Transmitting/ receiving means *504* |
| Broadcast information interpreter *501* ← | Physical channel de-multiplexer *503* ← | |
| SRS configuration information interpreter *502* ← | | |

## Figure 6

| | | |
|---|---|---|
| Random access preamble detector *605* ← | Physical channel de-multiplexer *604* ← | Transmittin g/receiving means *603* |
| Broadcast information generator *601* → | Physical channel multiplexer *602* → | |

# Figure 7

# Figure 8

Figure 9

# Figure 10

GP | UpPTS

| #1 | #2 | #3 | #4 | #5 | #6 |

RACH#0 | RACH#1

Example 1

RACH#0 | RACH#1

Example 2

RACH#0 | RACH#1

Example 3

RACH#0 | RACH#1

Example 4

RACH#0 | RACH#1

Example 5

# Figure 11

GP | UpPTS | Sub-frame 2

| #1 | #2 |

CP | Sequence

CP | Sequence

DFT detecting window

**EP 2 241 149 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2239989 A1

- WO 2007045504 A1